(19) Europäisches Patentamt / European Patent Office / Office européen des brevets

(11) **EP 4 604 476 A1**

(12) **EUROPEAN PATENT APPLICATION**
published in accordance with Art. 153(4) EPC

(43) Date of publication:
**20.08.2025  Bulletin 2025/34**

(21) Application number: **23878665.1**

(22) Date of filing: **20.06.2023**

(51) International Patent Classification (IPC):
**H04L 41/0631** (2022.01)

(52) Cooperative Patent Classification (CPC):
**H04L 41/0631; H04L 41/0663**

(86) International application number:
**PCT/CN2023/101540**

(87) International publication number:
**WO 2024/082668 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.10.2022  CN 202211299195**

(71) Applicant: **Huawei Technologies Co., Ltd.
Shenzhen, Guangdong 518129 (CN)**

(72) Inventors:
• **LI, Jiang
  Shenzhen, Guangdong 518129 (CN)**
• **JIANG, Youjun
  Shenzhen, Guangdong 518129 (CN)**
• **LI, Feng
  Shenzhen, Guangdong 518129 (CN)**
• **SUN, Wenhao
  Shenzhen, Guangdong 518129 (CN)**
• **ZHUANG, Yan
  Shenzhen, Guangdong 518129 (CN)**
• **LI, Yizhou
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **FAULT INFORMATION NOTIFICATION METHOD AND RELATED DEVICE THEREOF**

(57)    Embodiments of this application disclose a fault information notification method and a related device thereof, to resolve a problem that recovery time is excessively long because a fault cannot be rapidly propagated during service interruption. The method in embodiments of this application is performed by a first network device. The first network device includes a first port and a second port. The method includes: after the first port detects a first fault, generating a first fault notification through the first port; and sending, through the second port, a first bit stream generated by the first port, where the first bit stream carries the first fault notification written according to a preset definition.

[FIG. 3]

- After a first port detects a first fault, generate a first fault notification through the first port — 301
- Send, through a second port, a first bit stream generated by the first port, where the first bit stream carries the first fault notification written according to a preset definition — 302
- Stop sending service data sent from the first port — 303
- After the first port detects that the first fault is recovered, generate a first fault recovery notification through the first port — 304
- Send, through the second port, a second bit stream generated by the first port, where the second bit stream carries the first fault recovery notification written according to the preset definition — 305

**Description**

This application claims priority to Chinese Patent Application No. CN202211299195.5, filed with the China National Intellectual Property Administration on October 21, 2022 and entitled "FAULT INFORMATION NOTIFICATION METHOD AND RELATED DEVICE THEREOF", which is incorporated herein by reference in its entirety.

TECHNICAL FIELD

This application relates to the electric power field, and in particular, to a fault information notification method and a related device thereof.

BACKGROUND

With the development of the industrial internet, an industrial field network and a pan-industrial network have higher requirements on reliability. In the electric power field, IEC 61850-9-2 requires that network fault recovery be within 1 ms. In the motion control field, the Ethernet for control automation technology (EtherCAT) is used as an example, and IEC 61784 requires that fault recovery be 60 $\mu$s.

In a current network reliability solution, automatic protection switching (Automatic Protection System, APS) is usually used to switch a data packet to an available path when a network or a link is faulty, to avoid a fault point, so as to reduce impact of a fault on the data packet. APS modes may be classified into two types. In a first mode, a plurality of redundant paths, for example, two redundant paths, are used to implement dual fed and selective receiving. In this mode, a bandwidth is used for seamless failover, but networking overheads and deployment costs are high. This mode is used by a plurality of protocols in the industry, such as a redundancy protocol (IEEE 802.1CB), a hierarchical state routing (hierarchical state routing, HSR) protocol, and a parallel redundancy protocol (parallel redundancy protocol, PRP). In a second mode, after detecting a fault, a network node uses a protocol to propagate the fault. In this way, a network converges again and recovers to a reachable and loop-free state. Conventionally, a spanning tree protocol (spanning tree protocol, STP) or a rapid spanning tree protocol (rapid spanning tree protocol, RSTP), connectivity fault management CFM (connectivity fault management, CFM), and an Ethernet ring protection switching (Ethernet ring protection switching, EPRS) protocol may be used for implementing the APS. However, service interruption and recovery need to take dozens of milliseconds or even seconds. Fault sensitivity is an important factor that limits performance of the APS.

Therefore, how to provide a fault information notification method, to rapidly propagate a fault during APS protection switching, so as to shorten APS protection switching time and improve fault redundancy switching performance of an entire network is a technical problem to be urgently resolved by a person skilled in the art.

SUMMARY

Embodiments of this application provide a fault information notification method and a related device, to resolve a problem that recovery time is excessively long because a fault cannot be rapidly propagated during service interruption.

According to a first aspect, this application provides a fault information notification method, performed by a first network device. The first network device includes a first port and a second port. The method includes:

after the first port detects a first fault, generating a first fault notification through the first port, where the first network device is a network device that detects a fault in a transmission link, after the first network device detects the link fault, a port whose connection encounters the link fault generates a corresponding fault notification, and the link fault may be directly detected through the port whose connection encounters the fault, or may be detected by using another related detection apparatus in the first network device; and

sending, through the second port, a first bit stream generated by the first port, where the first bit stream carries the first fault notification written according to a preset definition, after generating the fault notification corresponding to the link fault, the first port writes the fault notification into a bit stream according to the preset definition, and then forwards the bit stream to the second port, and the second port forwards the bit stream to a next network device, so that the next network device extracts fault information from the bit stream, to implement fault propagation.

In this embodiment, after a network device detects a link fault, a first port of the network device generates a fault notification based on the link fault. Then, a network data connection port generates a bit stream carrying the fault notification. The bit stream is directly forwarded to a second port at a lower layer of a MAC layer. The second port sends the bit stream, includes the fault notification in the bit stream, and propagates the fault on an entire network in an interframe gap, so that fault propagation time is shortened, and reliability of a network system is improved.

In a possible implementation method, after the first port detects the first fault, the method further includes:

stopping sending service data sent from the first port.

In this embodiment, after the first port detects the first fault, it indicates that the service data sent externally from the first port cannot reach a destination network device. In this case, the first network device may stop (down) an entry whose outbound interface is the first port, that is, stop sending the service data from the first port.

In a possible implementation method, the method further includes:

after the first port detects that the first fault has been recovered, generating a first fault recovery notification through the first port; and

sending, through the second port, a second bit stream generated by the first port, where the second bit stream carries the first fault recovery notification written according to the preset definition.

In this embodiment, because the first fault is detected by the first port, the first port may further detect that the first fault has been recovered. Similar to the foregoing step of generating the fault notification, after detecting that the first fault has been recovered, the first port generates the corresponding first fault recovery notification.

In a possible implementation method, the first fault notification is generated in a reconciliation layer apparatus or a physical coding sublayer PCS apparatus.

In this embodiment, the first bit stream is specifically generated and forwarded at a lower layer of a MAC service (service) layer. Specifically, the first fault notification is generated in a corresponding entity or virtual apparatus of a reconciliation sublayer (reconciliation sublayer) or a physical coding sublayer (physical coding sublayer, PCS).

In a possible implementation method, the first fault notification is specifically a first ordered set.

In a possible implementation method, the preset definition includes:

reusing a reserved Reserved field of an ordered set, and representing a fault notification by using a value of a lane lane, where the fault notification includes one or more of fault information, fault recovery information, a fault distance, device information, and port information.

According to a second aspect, this application provides a fault information notification method, performed by a second network device. The second network device includes a first port and a second port. The method includes:

receiving a first bit stream from the first port, where the first bit stream carries a first fault notification written according to a preset definition, the first bit stream is generated by a port of a first network device, the first fault notification is generated based on a first fault, and the first network device is a device that detects the first fault; and

sending the first bit stream through the second port.

In this embodiment, the second network device is an intermediate network device that propagates a fault notification. After a bit stream carrying the fault notification is obtained by a port, the bit stream is forwarded through another port. Because the bit stream is generated and forwarded at a lower layer of a MAC service (service) layer, a fault can be propagated on an entire network in an interframe gap, so that fault propagation time is shortened, and reliability of a network system is improved.

In a possible implementation method, the first fault notification includes a first fault distance of the first fault; and the sending the first bit stream through the second port specifically includes:

modifying the first bit stream through the second port according to the preset definition, to increase the first fault distance in the first bit stream by one unit; and

sending a modified first bit stream from the second port.

In this embodiment, the first bit stream whose fault distance is modified is sent from the second port to a next network node. It may be understood that a hop count of the fault distance is increased by 1 each time the first bit stream passes through one network device, so that a network device in an application architecture can determine a fault location by using a distance value.

In a possible implementation method, after the receiving a first bit stream from the first port, the method further includes:

extracting the first fault distance from the first fault notification; and

stopping sending service data that is sent from the first port and whose transmission distance is not less than the first fault distance.

In this embodiment, after a fault location is determined, corresponding processing, for example, stopping sending service data that passes through a faulty link, may be performed.

In a possible implementation method, the method further includes:

receiving a second bit stream from the first port, where the second bit stream carries a first fault recovery notification written according to the preset definition, the second bit stream is generated by the port of the first network device, and the first fault recovery notification is generated after the first network device detects that the first fault is recovered;

modifying the second bit stream through the second port according to the preset definition, to increase the first fault distance in the second bit stream by one unit; and

sending a modified second bit stream from the second port.

In this embodiment, after the fault is recovered, the second bit stream carrying the first fault recovery notification is further received from the first port. When the first fault recovery notification includes the first fault distance, before the second port sends the second bit stream, the second bit stream is modified according to the preset definition, to increase the first fault distance in the second bit stream by one unit. The first fault distance may be used to recover the service data that is sent from the first port and whose transmission distance is not less than the first fault distance.

In a possible implementation method, if the second port is connected to a loop-breaking link, after the receiving a first bit stream from the first port, the method further includes:

unblocking the loop-breaking link.

In this embodiment, in a ring network, before a fault occurs, the loop-breaking link is usually provided to avoid a ring network broadcast storm. If a second port of a second network node is connected to the loop-breaking link, after the first bit stream carrying the first fault notification is received, the loop-breaking link is unblocked to implement APS.

In a possible implementation method, the method further includes:

blocking the loop-breaking link after the second bit stream carrying the first fault recovery notification is received from the first port.

In this embodiment, after the fault is recovered, to ensure that the service data can be transmitted according to an original path and to avoid a ring network broadcast storm, the loop-breaking link needs to be blocked again to recover to a state before the fault occurs.

According to a third aspect, this application provides a network device, including a first port and a second port.

The first port is configured to generate a first fault notification after detecting a first fault.

The first port is further configured to generate a first bit stream, where the first bit stream carries the first fault notification written according to a preset definition.

The first port is further configured to send the first bit stream to the second port.

The second port is configured to forward the first bit stream externally.

In a possible implementation method, the device further includes a processing module.

The processing module is configured to stop sending service data sent from the first port.

In a possible implementation method,

the first port is further configured to generate a first fault recovery notification after detecting that the first fault has been recovered;

the first port is further configured to generate a second bit stream, where the second bit stream carries the first fault recovery notification written according to the preset definition;

the first port is further configured to send the second bit stream to the second port; and

the second port is further configured to forward the second bit stream.

According to a fourth aspect, this application provides a network device, including a first port and a second port.

The first port is configured to receive a first bit stream, where the first bit stream carries a first fault notification written according to a preset definition, the first bit stream is generated by a port of a faulty link device, the first fault notification is generated based on a first fault, and the faulty link device is a node device that detects the first fault. It may be understood that the faulty link device may be the first network device in the foregoing method embodiment.

The first port is further configured to forward the first bit stream to the second port.

The second port is configured to send the first bit stream.

In a possible implementation method, the first fault notification includes a first fault distance of the first fault.

The second port is further configured to modify the first bit stream according to the preset definition, to increase the first fault distance in the first bit stream by one unit.

The second port is specifically configured to send a modified first bit stream.

In a possible implementation method, the device further includes a processing module.

The processing module is configured to extract the first fault distance from the first fault notification.

The processing module is further configured to stop sending service data that is sent from the first port and whose transmission distance is not less than the first fault distance.

In a possible implementation method,

the first port is further configured to receive a second bit stream, where the second bit stream carries a first fault recovery notification written according to the preset definition, the second bit stream is generated by the port of the faulty link device, and the first fault recovery notification is generated after the faulty link device detects that the first fault is recovered;

the second port is further configured to modify the second bit stream according to the preset definition, to increase the first fault distance in the second bit stream by one unit; and

the second port is further configured to send a modified second bit stream.

In a possible implementation method, if the second port is connected to a loop-breaking link,

the processing module is further configured to unblock the loop-breaking link after the first bit stream is received from the first port.

In a possible implementation method,

the processing module is further configured to block the loop-breaking link after the second bit stream carrying the first fault recovery notification is received from the first port.

According to a fifth aspect, this application provides an information transmission architecture, including a first network device and a second network device.

The first network device is configured to generate a first bit stream after detecting a first fault, where the first bit stream carries a first fault notification that is written according to a preset definition and that corresponds to the first fault.

The first network device is further configured to send the first bit stream to the second network device.

In a possible implementation method,

the second network device is configured to receive the first bit stream; and

the second network device is further configured to forward the first bit stream.

In a possible implementation method, the first fault notification includes a first fault distance of the first fault.

The second network device is specifically configured to: modify the first bit stream according to the preset definition, to increase the first fault distance in the first bit stream by one unit; and forward a modified first bit stream.

In a possible implementation method, if the second network device is connected to a loop-breaking link, the second network device is further configured to unblock the loop-breaking link after receiving the first bit stream.

In a possible implementation method, the first fault notification is generated in a reconciliation layer apparatus or a physical coding sublayer PCS apparatus.

In a possible implementation method, the first fault notification is specifically a first ordered set.

In a possible implementation method, the preset definition includes:

reusing a reserved Reserved field of an ordered set, and representing a fault notification by using a value of a lane lane, where the fault notification includes one or more of fault information, fault recovery information, a fault distance, device information, and port information.

According to a sixth aspect, this application provides a computer-readable storage medium. The computer storage medium stores computer instructions. The computer instructions are used for performing the method in any possible implementation of any one of the foregoing aspects.

According to a seventh aspect, an embodiment of this application provides a computer program product including instructions. When the computer program product is run on a computer, the computer is enabled to perform the method according to any one of the foregoing aspects.

According to an eighth aspect, this application provides a chip system. The chip system includes a processor, configured to support a network device in implementing functions in the foregoing aspects, for example, generating or processing data and/or information in the foregoing method. In a possible design, the chip system further includes a memory. The memory is configured to store program instructions and data that are necessary for the network device, to implement functions in any one of the foregoing aspects. The chip system may include a chip, or may include a chip and another discrete component.

In a possible implementation, when the chip system runs on the network device side, the network device may be supported to perform the method provided in the first aspect or the second aspect.

The solutions provided in the second aspect to the eighth aspect are used to implement or cooperate to implement the method provided in the first aspect, and therefore, can achieve beneficial effects the same as or corresponding to those in the first aspect. Details are not described herein again.

BRIEF DESCRIPTION OF DRAWINGS

FIG. 1 is a diagram of performing fault propagation on fault information in a form of a packet in a ring network;
FIG. 2 is a diagram of an application architecture of a fault information notification method according to an embodiment of this application;
FIG. 3 is a method flowchart of a fault information notification method according to an embodiment of this application;
FIG. 4 shows a field description of a sequence ordered set in an Ethernet protocol;
FIG. 5 is a method flowchart of a fault information notification method according to an embodiment of this application;
FIG. 6 is a diagram of performing fault propagation on fault information in a form of a sequence set according to an embodiment of this application;
FIG. 7 is a diagram of forwarding a fault distance in a form of a sequence set according to an embodiment of this application;
FIG. 8 is a diagram of performing propagation on fault recovery information in a form of a sequence set according to an embodiment of this application;
FIG. 9 is a diagram of forwarding a fault distance in fault recovery information in a form of a sequence set according to an embodiment of this application;
FIG. 10 is a diagram of a structure of a network device according to an embodiment of this application;
FIG. 11 is a diagram of a structure of a network device according to an embodiment of this application;
FIG. 12 is a diagram of a system architecture according to an embodiment of this application;
FIG. 13 is a diagram of service data flow switching according to an embodiment of this application;
FIG. 14 is a diagram of path switchback after a fault is recovered according to an embodiment of this application;
FIG. 15 is a diagram of a structure of a network device according to an embodiment of this application;
FIG. 16 is a diagram of a structure of a network device according to an embodiment of this application; and
FIG. 17 is a diagram of forwarding an ordered set at an RS sublayer according to an embodiment of this application.

DESCRIPTION OF EMBODIMENTS

Embodiments of this application provide a fault information notification method and a related device thereof. After detecting a link fault, a network device writes a fault notification into a bit stream through physical layer coding, so that the bit stream carrying the fault notification can be propagated in a plurality of network devices by using an interframe gap, to rapidly propagate the link fault, shorten network fault redundancy recovery time, and improve system reliability.

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. Moreover, the terms "include", "have", and any other variants are intended to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during implementation in actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

The network device in embodiments of this application may be a physical device such as a router, a switch, or a gateway, or may be implemented as a virtualization device. The virtualization device may be a virtual machine (virtual machine, VM), a virtual router, or a virtual switch that runs a program for sending a packet. The virtualization device is deployed on a hardware device (for example, a physical server). For example, the network device may be implemented based on a general-purpose physical server in combination with a network function virtualization (network function virtualization, NFV) technology.

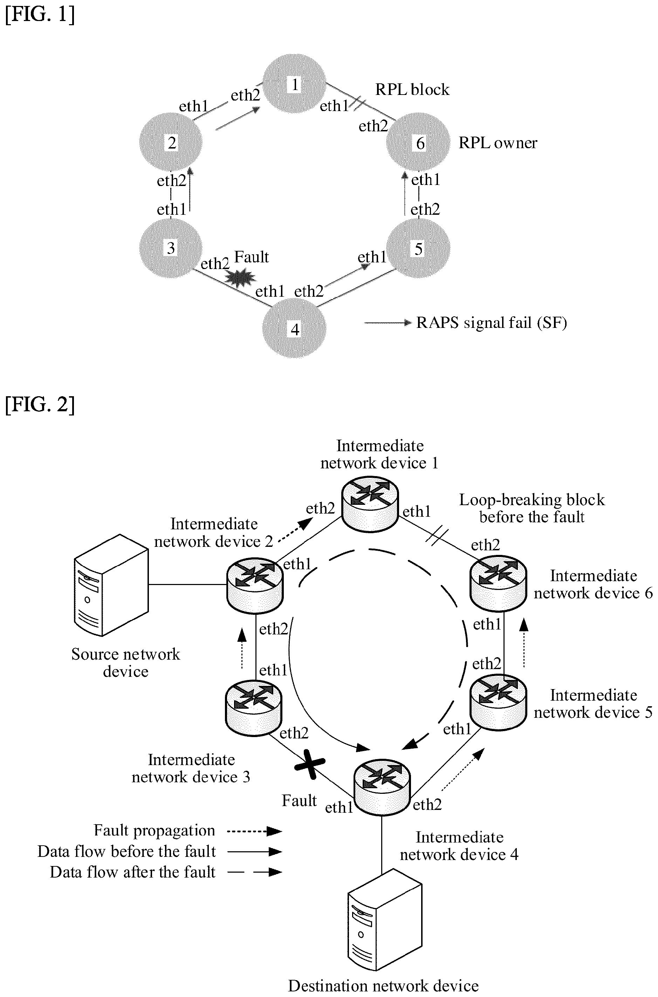

In a network data transmission process, if a network or a link is faulty, fault propagation is notified by using a protocol packet. For example, in an industrial internet of a ring topology, fault propagation is notified by using a ring auto protection switching (Ring Auto Protection Switching, RAPS) fault information notification (Signal Failed, SF) packet of an Ethernet ring protection switching (Ethernet Ring Protection Switching, ERPS) protocol. As shown in FIG. 1, a network device 1 and a network device 6 are ring protection link (Ring Protection Link, RPL) loop-breaking (Block) link nodes. The network device 6 is an RPL owner (owner) node. A link fault occurs between a network device 3 and a network device 4. In this case, the network device 3 and the network device 4 continuously send three RAPS SF packets to other network devices, for example, send one RAPS SF packet at a specific interval (for example, 5s) to notify other nodes to perform notification of fault propagation, or a continuity check message (continuity check message, CCM) in CFM is used in coordination with the RAPS SF packet to trigger ERPS switching by using a CCM packet.

Due to a limitation of an Ethernet standard, a layer 2 fault information notification packet is sent frame by frame, and a gap is required between frames. After receiving a frame, the network device and a component need a period of time to recover and prepare for receiving a next frame. A minimum length of a frame is 64 bytes, and processing and queuing delays exist during forwarding on each node due to factors such as scheduling. As a result, forwarding delay overheads of the notification packet on each node are high, and fault propagation efficiency is affected.

In view of this, an embodiment of this application provides a fault information notification method. Detected fault information is written into a bit stream in a form of physical layer coding, so that the bit stream carrying a fault notification can be propagated in a plurality of network devices by using an interframe gap, to rapidly propagate a link fault, shorten network fault redundancy recovery time, and improve system reliability.

FIG. 2 is a diagram of an application architecture of a fault information notification method according to an embodiment of this application. As shown in FIG. 2, the application architecture includes a source network device, an intermediate network device 1 to an intermediate network device 4, and a destination network device. The source network device and the destination network device may be servers, and the intermediate network device 1 to the intermediate network device 4 may be physical devices such as routers, switches, or gateways. The source network device needs to send a data packet to the destination network device, and the data packet passes through the intermediate network devices between the source network device and the destination network device.

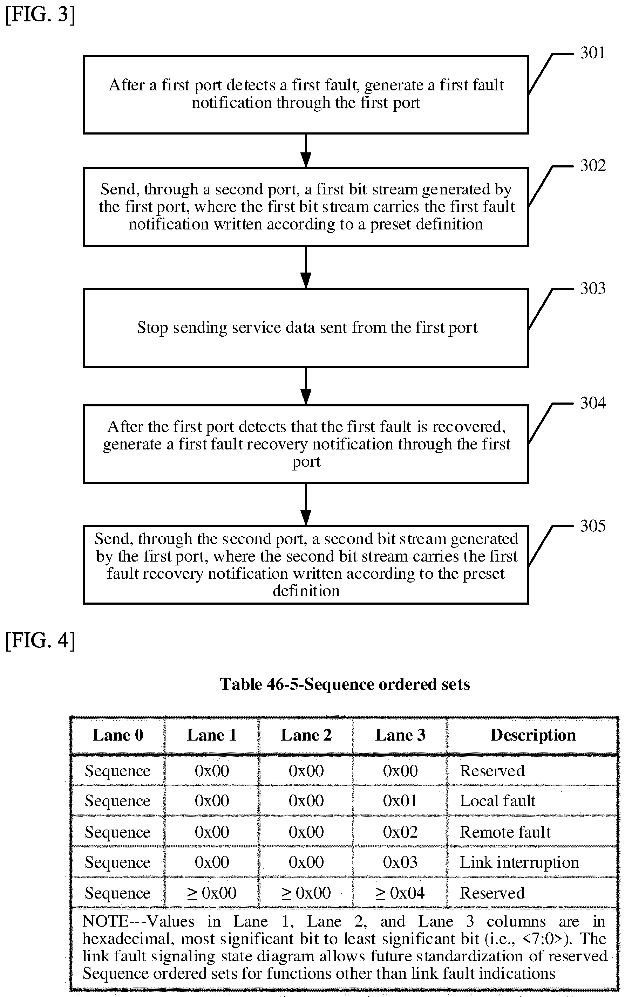

FIG. 3 is a method flowchart of a fault information notification method according to an embodiment of this application. As shown in FIG. 3, the method is performed by a first network device. The first network device may be an intermediate network device in the foregoing application architecture, and processes and propagates a link fault when detecting the link fault. The first network device includes a first port and a second port. The first port and the second port are separately configured to connect to another adjacent intermediate network device. The method includes the following steps.

301: After the first port detects a first fault, generate a first fault notification through the first port.

In this embodiment, the first network device is an intermediate network device that detects a fault in a transmission link, and corresponds to the intermediate network device 3 or the intermediate network device 4 in FIG. 2. After the first network device detects the link fault, a port whose connection encounters the link fault generates a corresponding fault notification. It may be understood that the link fault may be directly detected through the port whose connection encounters the fault, or may be detected by using another related detection apparatus in the first network device.

Both the first port and the second port of the network device are network data connection ports, and "first", "second", and the like are used to distinguish between similar objects. The network data connection port corresponds to a port at a physical layer (Physical Layer, PHY) below a medium access control (Medium Access Control, MAC) layer. After the first fault is detected, the first port directly generates the corresponding first fault notification. Refer to FIG. 2. An example in which the first network device is the intermediate network device 3 is used. A link fault is detected on an eth2 port of the intermediate network device 3. In this case, the eth2 port represents the first port of the first network device, and eth2 directly generates the first fault notification. Similarly, if the first network device is the intermediate network device 4, an eth1 port of the intermediate network device 4 is the first port of the first network device. It should be noted that the first fault notification is an intermediate parameter generated from a process of detecting the first fault to a process of generating a first bit stream, and is used to subsequently generate the first bit stream, so that information in the first fault notification is propagated in a form of the first bit stream. In actual application, after detecting the first fault, the first port may directly generate the first bit stream based on the first fault.

302: Send, through the second port, the first bit stream generated by the first port, where the first bit stream carries the first fault notification written according to a preset definition.

In this embodiment, fault propagation is shown in a direction of a dotted line arrow in FIG. 2. After generating a fault notification corresponding to a link fault, the first port writes the fault notification into a bit stream according to the preset definition, and then forwards the bit stream to the second port, and the second port forwards the bit stream to a next network device, so that the next network device extracts fault information from the bit stream, to implement fault propagation. The next network device refers to an intermediate network device connected to the second port of the first network device.

It may be understood that the first port is a physical transmission medium, and is located at a physical layer in an open system interconnection (open system interconnection, OSI) model, and a basic transmission unit is a bit. In the IEEE 802.3 protocol that describes an implementation method of the physical layer and a MAC sublayer of a data link layer, a reserved (reserved) field in the bit stream is specified. Therefore, the reserved field is defined to be expressed as the fault notification, so that a function of transferring the fault information can be implemented.

It may be understood that the first bit stream is specifically generated and forwarded at a lower layer of a MAC service (service) layer. Specifically, the first fault notification is generated in a corresponding entity or virtual apparatus of a reconciliation sublayer (reconciliation sublayer) or a physical coding sublayer (physical coding sublayer, PCS).

The first fault notification may be specifically an ordered set (ordered set). In this case, the preset definition includes: reusing a reserved Reserved field of the ordered set, and representing the fault notification by using a value of a lane lane, where the fault notification includes one or more of fault information, fault recovery information, a fault distance, device information, and port information.

In a possible implementation method, FIG. 4 shows a field description of a sequence ordered set in an Ethernet protocol (the IEEE standard 802.3). In the IEEE 802.3 protocol, a sequence ordered set (sequence ordered set) is specified. A preset reusing definition is performed on the ordered set, to achieve an objective of writing related information of a link fault into a bit stream by using the ordered set for transmission and propagation. The preset definition includes:

Lane 0 remains unchanged as Sequence, and three bytes of Lane 1, Lane 2, and Lane 3 are reused.

Lane 3 defines a new function type of the ordered set. For example, a value of Lane 3 being 7 indicates a fault information notification, and a value of Lane 3 being 6 indicates a fault recovery notification. In a ring network, before a fault occurs, a loop-breaking link is usually provided to avoid a ring network broadcast storm. Therefore, a value of Lane 3 being 5 may indicate that during APS switching, after receiving the fault recovery notification, unblock (unblock) nodes at both ends of the loop-breaking link block (block) node ports, and reply with an acknowledge character (acknowledge character, ACK) response and the like.

Similar to reusing the sequence ordered set, an existing sequence control character (sequence control character) may also be reused to achieve an objective of propagating the fault notification, and a new value is defined in Lane 1 or Lane 2 to indicate that the fault information needs to be transferred across ports.

Lane 1 and Lane 2 may indicate carried fault information, and may be fault distance vectors, or may be device information and port information, such as device IDs and ports.

If a large amount of fault information needs to be carried, one ordered set cannot be reused to carry the fault information. In this case, two or more ordered sets may be reused, and a plurality of ordered sets are used to carry the fault information. A reusing method of the plurality of ordered sets is the same as that of one ordered set. The plurality of ordered sets are forwarded at a lower layer of the MAC layer, and the fault information is extracted from the plurality of reused ordered sets.

The ordered set carries ID information of a faulty node, and optionally carries port information of the fault. The information is used for forwarding control signaling at the RS layer or the PCS layer. A node that receives the signaling selectively refreshes a MAC table. Blocked packets on the ring network are not used for forwarding the signaling.

According to the fault information notification method provided in this embodiment of this application, after a network device detects a link fault, a first port of the network device generates a fault notification based on the link fault. Then, a network data connection port generates a bit stream carrying the fault notification. The bit stream is directly forwarded to a second port at a lower layer of a MAC layer. The second port sends the bit stream, so that a next network device extracts fault information from the bit stream, to implement fault propagation. In this embodiment of this application, in a bit stream-based fault notification method, a CCM in CFM may be replaced to trigger coordination of a network switching protection protocol such as ERPS, and the fault notification in a form of the bit stream in this application is used to trigger the ERPS or another network switching protection protocol to perform path switching.

It may be understood that, in a network fault switching process, detection time, propagation time, and switching time determine network reliability. More specifically, a network reliability formula is expressed as follows:

$$Availability = \frac{MTTF}{MTBF} = \frac{MTTF}{MTTD + MTTF + MTTR}.$$

MTTF is mean time to failure (Mean Time To Failure). MTBF is mean time between failures (Mean Time Between Failures). MTTD is mean time to detect (mean time to detect). MTTR is mean time to repair (Mean time to repair).

In this embodiment of this application, the bit stream is used to carry the fault notification, and the fault is propagated on an entire network in an interframe gap, so that MTTD time is shortened, and reliability of a network system is improved.

303: Stop sending service data sent from the first port.

In a possible implementation method, after the first port detects the first fault, it indicates that the service data sent externally from the first port cannot reach a destination network device. In this case, the first network device may stop (down) an entry whose outbound interface is the first port, that is, stop sending the service data from the first port. It should be noted that the service data that stops being sent is service data that is received from the second port and that is sent externally by the first port.

It may be understood that the network device sends the service data in a form of a data packet, and the data packet includes a destination address used to determine a packet forwarding path. The forwarding path is represented by a port of the network device. To be specific, the network device may determine, based on the destination address of the data packet, a port that can forward the data packet. After detecting a link fault occurring in a connection of a port, the network device triggers APS, so that service data originally sent through the outbound port is changed to be sent from another port.

304: After the first port detects that the first fault has been recovered, generate a first fault recovery notification through the first port.

In a possible implementation method, because the first fault is detected by the first port, the first port may further detect that the first fault has been recovered. Similar to the foregoing step of generating the fault notification, after detecting that the first fault has been recovered, the first port generates the corresponding first fault recovery notification. It may be understood that a generation principle of the first fault notification is similar to that of the first fault recovery notification. Details are not described herein again.

305: Send, through the second port, a second bit stream generated by the first port, where the second bit stream carries the first fault recovery notification written according to the preset definition.

In a possible implementation method, after generating the first fault recovery notification, the first port writes the first fault recovery notification into the second bit stream according to the preset definition. Then, the second bit stream is forwarded to the second port, and the second port forwards the second bit stream to a next network device, so that the next network device extracts fault recovery information from the second bit stream, and rapidly propagates the fault recovery notification.

It may be understood that a generation method and a preset definition of the second bit stream are similar to those of the first bit stream, and both the second bit stream and the first bit stream are generated and forwarded at a lower layer of a MAC service (service) layer, and preset definition is performed by reusing a reserved field. Details are not described herein again.

According to the fault information notification method provided in this embodiment of this application, a network device that detects a link fault is used as an execution body, a bit stream carrying a fault notification is generated through a first port that detects the fault and that is of the network device, and the first port sends the bit stream to a second port, so that the second port forwards the bit stream to a next network device. In this way, the bit stream carrying the fault notification can be propagated in a plurality of network devices by using an interframe gap, to rapidly propagate the link fault, reduce network fault redundancy recovery time, and improve system reliability. In addition, the method further includes: after it is detected that the link fault is recovered, writing a fault recovery notification into the bit stream, so that a network node in the application architecture can recover to an original working state as soon as possible, to further improve the system reliability.

This application further provides a fault information notification method. The method is performed by a second network device. The second network device may be an intermediate network device in the application architecture shown in FIG. 2, and forwards a bit stream carrying a fault notification after receiving the bit stream. A first network device includes a first port and a second port. The first port and the second port are separately configured to connect to another adjacent intermediate network device.

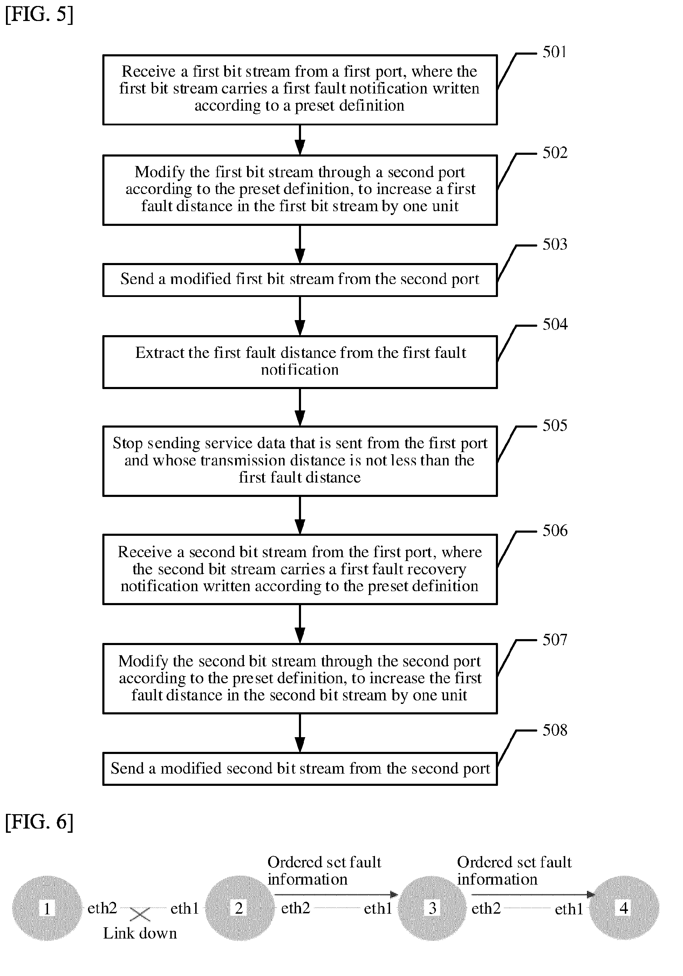

FIG. 5 is a method flowchart of a fault information notification method according to an embodiment of this application. The method includes the following steps.

501: Receive a first bit stream from the first port, where the first bit stream carries a first fault notification written according to a preset definition, the first bit stream is generated by a port of the first network device, the first fault notification is generated based on a first fault, and the first network device is a device that detects the first fault.

In this embodiment, the second network device is an intermediate network device that propagates the fault notification, and corresponds to the intermediate network device 1, the intermediate network device 2, the intermediate network device 5, or the intermediate network device 6 in FIG. 2. When a link fault occurs, the first network device that detects the link fault generates the first bit stream. The first bit stream is specifically generated by ports at two ends of the link fault. For example, refer to FIG. 2. The second network device is the intermediate network device 5, and the first network device is the intermediate network device 4. In this case, a link fault occurs between the intermediate network device 3 and the intermediate network device 4, and ports corresponding to the link fault are a second port (eth2) of the intermediate network device 3 and a first port (eth1) of the intermediate network device 4. Therefore, the first bit stream is generated by eth1 of the intermediate network device 4. eth1 of the intermediate network device 4 generates the first fault notification based on the link fault (the first fault), and then writes the first fault notification into the first bit stream. It should be noted that the first fault notification is an intermediate parameter generated from a process of detecting the first fault to a process of generating the first bit stream, and is used to subsequently generate the first bit stream, so that information in the first fault notification is propagated in a form of the first bit stream. In actual application, after detecting the first fault, eth1 of the intermediate network device 4 may directly generate the first bit stream based on the first fault.

After receiving the first bit stream from the first port, the second network device may directly send the first bit stream through the second port, so that a next network device extracts fault information from the bit stream, to implement fault propagation. For example, after receiving the first bit stream, eth1 of the intermediate network device 5 forwards the first bit stream to the intermediate network device 6 through eth2 of the intermediate network device 5.

It may be understood that a network data connection port of a network device is a physical transmission medium, and is located at a physical layer in an open system interconnection (open system interconnection, OSI) model, and a basic transmission unit is a bit. In the IEEE 802.3 protocol that describes an implementation method of the physical layer and a MAC sublayer of a data link layer, a reserved (reserved) field in the bit stream is specified. Therefore, the reserved field is defined to be expressed as the fault notification, so that a function of transferring the fault information can be implemented.

It may be understood that the first bit stream is specifically generated and forwarded at a lower layer of a MAC service (service) layer. Specifically, the first fault notification is generated in a corresponding entity or virtual apparatus of a reconciliation sublayer (reconciliation sublayer) or a physical coding sublayer (physical coding sublayer, PCS).

The first fault notification may be specifically an ordered set (ordered set). In this case, the preset definition includes: reusing a reserved Reserved field of the ordered set, and representing the fault notification by using a value of a lane lane, where the fault notification includes one or more of fault information, fault recovery information, a fault distance, device information, and port information. It may be understood that, in the foregoing step 302, an example is used for a possible implementation method of the preset definition. Therefore, details are not described again.

According to the fault information notification method provided in this embodiment of this application, after a bit stream carrying a fault notification is obtained by a port, the bit stream is forwarded through another port. Because the bit stream is generated and forwarded at a lower layer of a MAC service (service) layer, a fault can be propagated on an entire network in an interframe gap, so that fault propagation time is shortened, and reliability of a network system is improved.

In a possible implementation method, the first fault notification includes a first fault distance of the first fault. After receiving the first bit stream from the first port, the second network device may further process the first bit stream, so that the first bit stream can reflect a location where a fault is sent. Details are shown in the following step 502 and step 503.

502: Modify the first bit stream through the second port according to the preset definition, to increase the first fault distance in the first bit stream by one unit.

In this embodiment, after receiving the first bit stream, the second port may further modify the first bit stream according to the preset definition. The first fault distance is obtained by increasing an initial fault distance by a distance unit. The initial fault distance is an initial value that indicates the fault distance when the network device that detects the first fault generates the fault notification. In a process of propagating the fault notification, one distance unit is increased each time the fault notification passes through one network device. For example, when detecting the first fault, the intermediate network device 4 generates a first fault notification whose initial fault distance is 2, writes the first fault notification into a first bit stream, and sends the first bit stream to the intermediate network device 5. After receiving the first bit stream, the intermediate network device 5 extracts the first fault distance. In this case, the first fault distance is the initial fault distance, and it is assumed that a distance value of the initial fault distance is set to 2. Before forwarding the first bit stream to the intermediate network device 6, the intermediate network device 5 first modifies the first bit stream, and increases the value of the first fault distance by one distance unit. When a value of one distance unit is 1, the distance value of the first fault distance is 3. It may be understood that definitions of a distance unit of the initial fault distance and a distance unit of each hop belong to an engineering implementation scope, and are not limited herein. The distance value of the initial fault distance may be 1, the distance value may be increased by a distance value of one distance unit to 2, and the distance value is a value indicating the fault distance in the fault notification. An actual fault distance may be obtained through calculation by using a fault value. For example, when the distance value of the initial fault distance is 2, and the distance value of one distance unit is 1, if the distance value of the first fault distance in the first fault notification is 4, it indicates that a fault distance from the second network device to a faulty link device is three hops. When the distance value of the initial fault distance is 1, and the distance value of one distance unit is 2, if the distance value of the first fault distance in the first fault notification is 3, it indicates that a fault distance from the second network device to a faulty link device is two hops. When the distance value of the initial fault distance is 1, and the distance value of one distance unit is 1, if the distance value of the first fault distance in the first fault notification is 1, it indicates that the second network device is adjacent to a faulty link device.

503: Send a modified first bit stream from the second port.

In this embodiment, the first bit stream whose fault distance is modified is sent from the second port to a next network node. It may be understood that a hop count of the fault distance is increased by 1 each time the first bit stream passes through one network device, so that a network device in an application architecture can determine a fault location by using a distance value.

504: Extract the first fault distance from the first fault notification.

In a possible implementation method, after the fault location is determined, corresponding processing, for example, stopping sending service data that passes through a faulty link, may be performed.

505: Stop sending service data that is sent from the first port and whose transmission distance is not less than the first fault distance.

In this embodiment, it may be understood that the service data that stops being sent is service data that is received from the second port and that is sent externally by the first port, instead of service data that is received from the first port and that is sent internally to the second port by the network device. A specific implementation may be: flushing (flushing) an entry of a corresponding port (MAC-Port), or stopping (down) an entry in which an outbound port of the service data is the first port and a distance to a destination network device is greater than or equal to the first fault distance.

In a possible implementation method, if the second port is connected to a loop-breaking link, after the first bit stream is received from the first port, the method further includes: unblocking the loop-breaking link.

It may be understood that, in a ring network, before a fault occurs, the loop-breaking link is usually provided to avoid a ring network broadcast storm. If a second port of a second network node is connected to the loop-breaking link, after the first bit stream carrying the first fault notification is received, the loop-breaking link is unblocked to implement APS. As shown in FIG. 2, a loop-breaking link exists between the intermediate network device 1 and the intermediate network device 6. Before a fault occurs, a data flow is transferred in a direction of a solid line arrow. After the fault occurs, if the second network device is the intermediate network device 6, the loop-breaking link is unblocked after the first bit stream is received, so that the data flow can be transferred in a direction of a dashed line arrow.

506: Receive a second bit stream from the first port, where the second bit stream carries a first fault recovery notification written according to the preset definition, the second bit stream is generated by the port of the first network device, and the first fault recovery notification is generated after the first network device detects that the first fault is recovered.

In a possible implementation method, after the fault is recovered, the second bit stream carrying the first fault recovery notification is further received from the first port. It may be understood that generation and forwarding principles of the second bit stream are similar to those of the first bit stream. Details are not described herein again.

507: Modify the second bit stream through the second port according to the preset definition, to increase the first fault distance in the second bit stream by one unit.

It may be understood that, a modification manner of the second bit stream is similar to that of the first bit stream, after the first fault is recovered, the first fault distance may be used to recover the service data that is sent from the first port and whose transmission distance is not less than the first fault distance.

508: Send a modified second bit stream from the second port.

In this embodiment, the second bit stream whose fault distance is modified is sent from the second port to a next network node. It may be understood that the hop count of the fault distance is increased by 1 each time the second bit stream passes through one network device, so that the network device in the application architecture can determine a fault recovery location by using a distance value, to recover sending of the service data that passes through the link.

In a possible implementation method, if the second port is connected to the loop-breaking link, after the second bit stream is received from the first port, the method further includes: blocking the loop-breaking link.

It may be understood that, after the fault is recovered, to ensure that the service data can be transmitted according to an original path and to avoid a ring network broadcast storm, the loop-breaking link needs to be blocked again to recover to a state before the fault occurs.

For ease of understanding, this application further provides a fault information notification method. The method is jointly performed by a first network device and a second network device. The first network device is a device that detects a first fault, and the second network device is an intermediate network device that propagates a fault notification.

Refer to FIG. 6. The first network device is a switch 1 or a switch 2, and the second network device is a switch 3 or a switch 4. A link between the switch 1 and the switch 2 is downed (a link fault occurs). After detecting the link fault on eth1, the switch 2 generates, on eth1, an ordered set carrying fault distance information at a lower layer of a MAC service layer, then directly forwards the ordered set to eth2 at a lower layer of the MAC layer, and sends the ordered set to the switch 3 from eth2.

The switch 3 receives, from eth1, the ordered set carrying the fault distance information, checks ordered set information, extracts fault information, directly forwards the ordered set to eth2 of the switch 3 at a lower layer of a MAC layer, and sends the ordered set to the switch 4.

After receiving the ordered set, the switch 4 processes the ordered set in the same way as the switch 3. Switches behind the switch 4 process the ordered set in the same way.

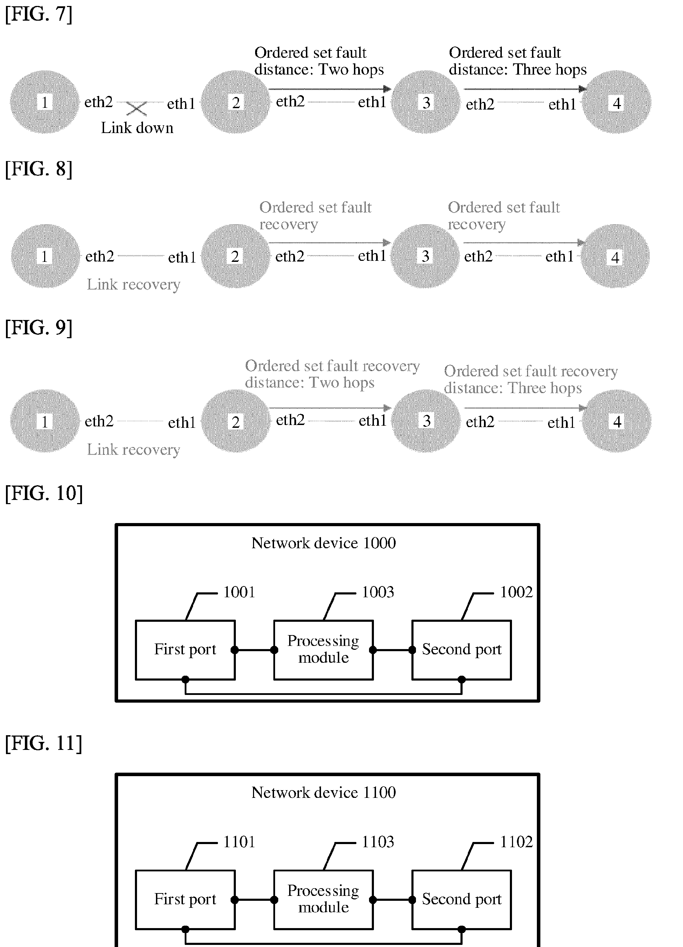

Refer to FIG. 7. When a switch 2 generates an ordered set carrying fault distance information at a reconciliation layer (Reconciliation Layer) sublayer (referred to as an RS sublayer for short below) of eth1, a value of Lane 3 is 7 (where that Lane 3 indicates a reused ordered set type, and the value being 7 indicates a fault information notification is defined), and a value of Lane 1 is 1, indicating that a fault distance is 1. Then, the RS sublayer forwards the ordered set to an RS sublayer of eth2, and the RS sublayer of eth2 forwards the ordered set to a switch 3. During forwarding, a Lane 1 field is increased by 1, to be specific, a hop count of the fault distance is increased by 1 each time the ordered set passes through one node.

The switch 3 receives the ordered set carrying the fault distance information from eth1 and checks ordered set information. Lane 3 is 7, and Lane 1 is 2. It is detected that a link is faulty and a fault location is in a place whose distance to an eth1 outbound interface of the switch 3 is 2. After obtaining the fault information, the switch 3 may perform corresponding processing, for example, flushing a Mac-Port entry or downing an entry in which an outbound interface is eth1 and a distance to a destination terminal-device is greater than or equal to 2. In addition, the switch 3 forwards the ordered set to a switch 4 at an RS sublayer. During forwarding, the hop count of the fault distance is increased by 1, that is, Lane 1 is increased by 1.

If a node has a block (loop-breaking) port, the block port is unblocked after the ordered set is received.

Refer to FIG. 8. A node fault is recovered, and processing of a fault recovery notification is the same as the foregoing fault information notification process.

After detecting that a link fault on eth1 is recovered, a switch 2 generates, on eth1, a fault recovery ordered set at a lower layer of a MAC layer, then directly forwards the fault recovery ordered set to eth2 at the lower layer of the MAC layer, and sends the fault recovery ordered set to a switch 3 from eth2.

The switch 3 receives the fault recovery ordered set from eth1, checks ordered set information, extracts fault information, directly forwards the ordered set to eth2 of the switch 3 at a lower layer of a MAC layer, and sends the ordered set to a switch 4.

After receiving the ordered set, the switch 4 processes the ordered set in the same way as the switch 3. Switches behind the switch 4 process the ordered set in the same way.

Refer to FIG. 9. When a switch 2 generates an ordered set at an RS sublayer of eth1, a value of Lane 3 is 6 (where that the value of Lane 3 being 6 indicates a fault recovery notification is defined), and a value of Lane 1 is 1, indicating that a fault recovery distance is 1. Then, the RS sublayer forwards the ordered set to an RS sublayer of eth2, and the RS sublayer of eth2 forwards the ordered set to a switch 3. During forwarding, a Lane 1 field is increased by 1, to be specific, a hop count of the fault recovery distance is increased by 1 each time the ordered set passes through one node.

The switch 3 receives the ordered set carrying fault recovery distance information from eth1, and checks ordered set information. Lane 3 is 6 and Lane 1 is 2. It is detected that a link fault recovery location is in a place whose distance to an eth1 outbound interface of the switch 3 is 2. After obtaining the fault recovery information, the switch 3 may perform corresponding processing, that is, activating an entry in which an outbound interface is eth1 and a distance to a destination terminal-device is greater than or equal to 2. In addition, the switch 3 forwards the ordered set to a switch 4 at an RS sublayer. During forwarding, the hop count of the fault recovery distance is increased by 1, that is, Lane 1 is increased by 1.

If a node has a block port that is unblocked due to a fault notification, the node blocks the port again after receiving an ordered set fault recovery notification.

In APS switching protection, other information that needs to be exchanged across nodes can be transmitted at a lower layer of a MAC layer by using the ordered set.

For example, if a node has a block port that is unblocked due to a fault notification, the node blocks the port again after receiving an ordered set fault recovery notification, and then an ACK response notifies each node. The ACK may reuse the ordered set. For example, that a value of Lane 3 is defined as 5 indicates the ACK response.

To implement the foregoing embodiment, this application further provides a network device. The network device may be the first network device in the foregoing method embodiment. FIG. 10 is a diagram of a structure of a network device 1000 according to an embodiment of this application.

As shown in FIG. 10, the network device 1000 includes a first port 1001 and a second port 1002. The first port 1001 and the second port 1002 may be collectively referred to as a transceiver module.

The first port 1001 is configured to generate a first fault notification after detecting a first fault.

The first port 1001 is further configured to generate a first bit stream, where the first bit stream carries the first fault notification written according to a preset definition.

The first port 1001 is further configured to send the first bit stream to the second port 1002.

The second port 1002 is configured to forward the first bit stream externally.

In a possible implementation method, the device further includes a processing module 1003.

The processing module 1003 is configured to stop sending service data sent from the first port.

In a possible implementation method, the first port 1001 is further configured to generate a first fault recovery notification after detecting that the first fault has been recovered.

The first port 1001 is further configured to generate a second bit stream, where the second bit stream carries the first fault recovery notification written according to the preset definition.

The first port 1001 is further configured to send the second bit stream to the second port 1002.

The second port 1002 is further configured to forward the second bit stream.

This application further provides a network device. The network device may be the second network device in the foregoing method embodiment. FIG. 11 is a diagram of a structure of a network device 1100 according to an embodiment of this application.

As shown in FIG. 11, the network device 1100 includes a first port 1101 and a second port 1102. The first port 1101 and the second port 1102 may be collectively referred to as a transceiver module.

The first port 1101 is configured to receive a first bit stream, where the first bit stream carries a first fault notification written according to a preset definition, the first bit stream is generated by a port of a faulty link device, the first fault notification is generated based on a first fault, and the faulty link device is a node device that detects the first fault. It may be understood that the faulty link device may be the first network device in the foregoing method embodiment.

The first port 1101 is further configured to forward the first bit stream to the second port 1102.

The second port 1102 is configured to send the first bit stream.

In a possible implementation method, the first fault notification includes a first fault distance of the first fault.

The second port 1102 is further configured to modify the first bit stream according to the preset definition, to increase the first fault distance in the first bit stream by one unit.

The second port 1102 is specifically configured to send a modified first bit stream.

In a possible implementation method, the device further includes a processing module 1103.

The processing module 1103 is configured to extract the first fault distance from the first fault notification.

The processing module 1103 is further configured to stop sending service data that is sent from the first port and whose transmission distance is not less than the first fault distance.

In a possible implementation method,
the first port 1101 is further configured to receive a second bit stream, where the second bit stream carries a first fault recovery notification written according to the preset definition, the second bit stream is generated by the port of the faulty link device, and the first fault recovery notification is generated after the faulty link device detects that the first fault is recovered.

The second port 1102 is further configured to modify the second bit stream according to the preset definition, to increase the first fault distance in the second bit stream by one unit.

The second port 1102 is further configured to send a modified second bit stream.

In a possible implementation method, if the second port is connected to a loop-breaking link,
the processing module 1103 is further configured to unblock the loop-breaking link after the first bit stream is received from the first port 1101.

In a possible implementation method,
the processing module 1103 is further configured to block the loop-breaking link after the second bit stream carrying the first fault recovery notification is received from the first port 1101.

Refer to FIG. 2. This application further provides an information transmission architecture, including a first network device and a second network device. The first network device corresponds to the intermediate network device 3 or the intermediate network device 4 in FIG. 2, and the second network device corresponds to any one of the intermediate network device 1, the intermediate network device 2, the intermediate network device 5, or the intermediate network device 6 in FIG. 2. The first network device is configured to perform the steps performed by the first network device in the embodiment shown in FIG. 3, and the second network device is configured to perform the steps performed by the second network device in the embodiment shown in FIG. 5.

For example, the information transmission architecture may be used to perform the following solution.

The first network device is configured to generate a first bit stream after detecting a first fault, where the first bit stream carries a first fault notification that is written according to a preset definition and that corresponds to the first fault.

The first network device is further configured to send the first bit stream to the second network device.

In a possible implementation,
the second network device is configured to receive the first bit stream.

The second network device is further configured to forward the first bit stream.

In a possible implementation,
the first fault notification includes a first fault distance of the first fault.

The second network device is specifically configured to: modify the first bit stream according to the preset definition, to increase the first fault distance in the first bit stream by one unit; and forward a modified first bit stream.

In a possible implementation,

if the second network device is connected to a loop-breaking link,
the second network device is further configured to unblock the loop-breaking link after receiving the first bit stream.

In a possible implementation,
the first fault notification is generated in a reconciliation layer apparatus or a physical coding sublayer PCS apparatus.

In a possible implementation,
the first fault notification is specifically a first ordered set.

In a possible implementation, the preset definition includes:

reusing a reserved Reserved field of an ordered set, and representing a fault notification by using a value of a lane lane, where the fault notification includes one or more of fault information, fault recovery information, a fault distance, device information, and port information.

To facilitate understanding of the packet transmission method provided in embodiments of this application, the following describes in detail the packet transmission method provided in embodiments of this application with reference to specific examples.

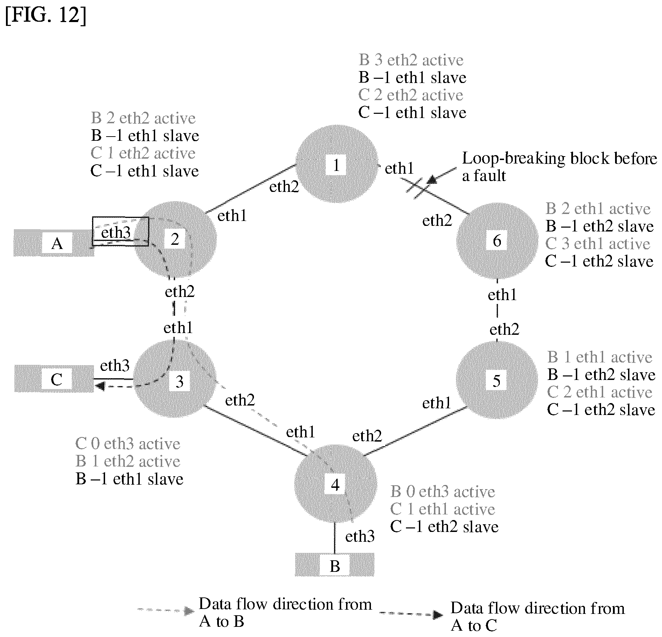

Example 1: A system architecture shown in FIG. 12 is used as an example. A ring network formed by six switches is used as an example, and a link between a switch 1 and a switch 6 is in a block state due to a loop break.

A terminal-side device accesses a network, and the switch in the ring network generates a distance vector entry: {destination device, distance vector, outbound port, entry status} by using a distance vector flooding (flooding) technology (where a distance vector signaling packet may be user-defined or an existing routing information protocol (Routing Information Protocol, RIP)/open shortest path first (Open Shortest Path First, OSPF) distance vector flooding manner may be used). As shown in FIG. 12, a distance from a switch 4 to a destination device B is defined as 0 because the switch 4 is directly connected to the destination device B, an entry {B 0 eth3 active} is generated, and flooding is performed on the ring network from an eth1 port and an eth2 port. Other node switches generate distance vector forwarding entries for the node switches to reach the destination B. A switch 2 is used as an example. {B 2 eth2 active} indicates that a distance from an eth2 port to B is 2, and that an entry is in an active state indicates that the entry is currently valid. The ring network needs to break a loop, and a block, for example, a block between 1 and 6, exists. Therefore, an entry distance to a destination device generated in a direction of another port may be set to -1 (or ∞). This does not affect entry switching due to characteristics of the ring network. A service packet is looked up in a distance vector table and forwarded. As shown in the foregoing figure, a direction of a data flow sent by a source device A to the destination device B is the switch 2-a switch 3-the switch 4, and a direction of a data flow sent by the source device A to a destination device C is the switch 2-the switch 3.

A link between the switch 3 and the switch 4 is downed, and the switch 3 and the switch 4 detect that the link is downed.

The switch 3 is used as an example. The switch 3 detects that eth2 is downed, generates an ordered set carrying fault distance information, and forwards the ordered set to eth1. An ordered set fault information notification is sent from eth1 (Lane 3 is 7). A distance vector of fault location information is 2 (where a value of Lane 1 is 2, a definition of an initial value of the distance vector belongs to an engineering implementation scope, the initial value may be another value, for example, 1, and the initial value is 2 in this example).

The switch 2 receives the ordered set in which Lane 3 = 7 from eth2 and performs the following processing: (1) A fault distance 2 is extracted, an entry in which an outbound port is eth2 and a distance is greater than or equal to 2 is downed, and a backup entry is enabled. As shown in the figure, B 2 eth2 is downed, and a backup entry B -1 eth1 is activated as an active entry. (2) The fault distance in the received ordered set is increased by 1 (that is, Lane 2 is increased by 1), and the ordered set block is forwarded through an eth1 port of the switch.

The switch 1 receives the ordered set in which Lane 3 = 7 from eth2. Processing is the same as that of the switch 2. It should be noted that because the switch 1 is a node having a block port, an eth1 port of the switch 1 further needs to be unblocked.

The switch 4 detects that the link is downed. Processing is the same as that of the switch 3.

Processing of the switch 5 is the same as that of the switch 2.

Processing of the switch 6 is the same as that of the switch 1.

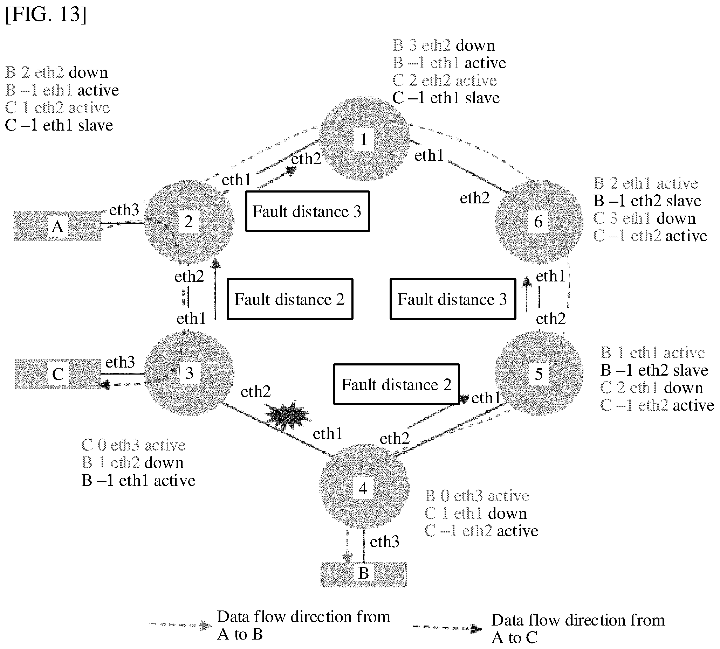

After the foregoing steps are performed, service data flow switching is completed. As shown in FIG. 13, a path of the data flow sent by the source device A to the destination device B changes to the switch 2-the switch 1-the switch 6-the switch 5-the switch 4, and a path of the data flow sent by the source device A to the destination device C remains unchanged.

After a fault is recovered, the switch 3 and the switch 4 generate and forward an ordered set after detecting that the link is recovered. In this case, a fault recovery notification carried by the ordered set is Lane 3 being 6. After receiving the ordered set fault recovery notification of Lane 3 = 6, each node directly forwards the ordered set recovery notification at an RS sublayer.

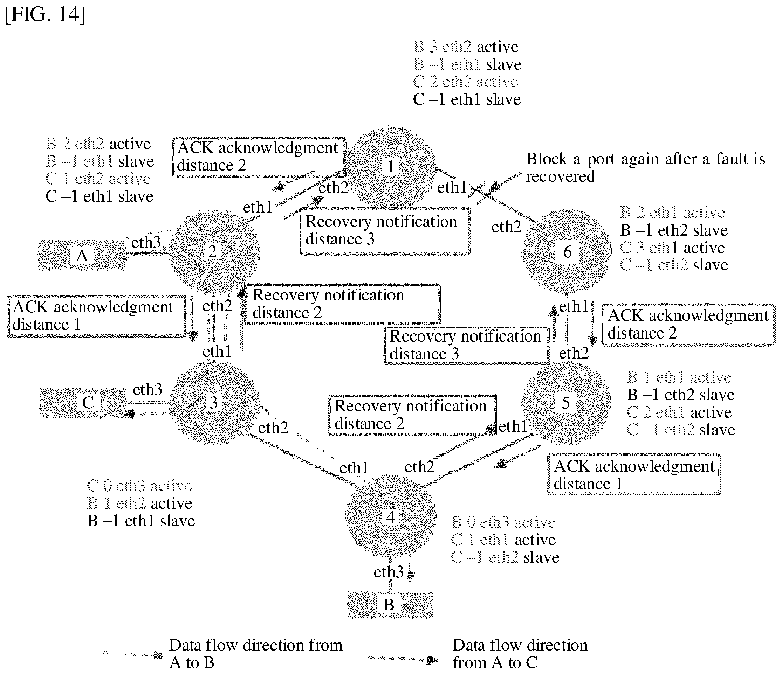

After receiving the ordered set recovery notification, the switch 1 and the switch 6 block the previously unblocked port again, and separately send an ACK acknowledgment ordered set (where a value of Lane 3 may be defined as 5). The acknowledgment ordered set may carry fault recovery distance location information (which may be obtained from the ordered set recovery notification). An ACK acknowledgment distance may be a physical distance, or may be specified in a manner different from that of the fault distance. After receiving an ACK, each node extracts the fault recovery distance information. The ordered set fault distance information is subtracted by 1 and then forwarded at the RS sublayer. Each node refreshes entries based on the extracted fault recovery distance information, and performs path switchback, as shown in FIG. 14.

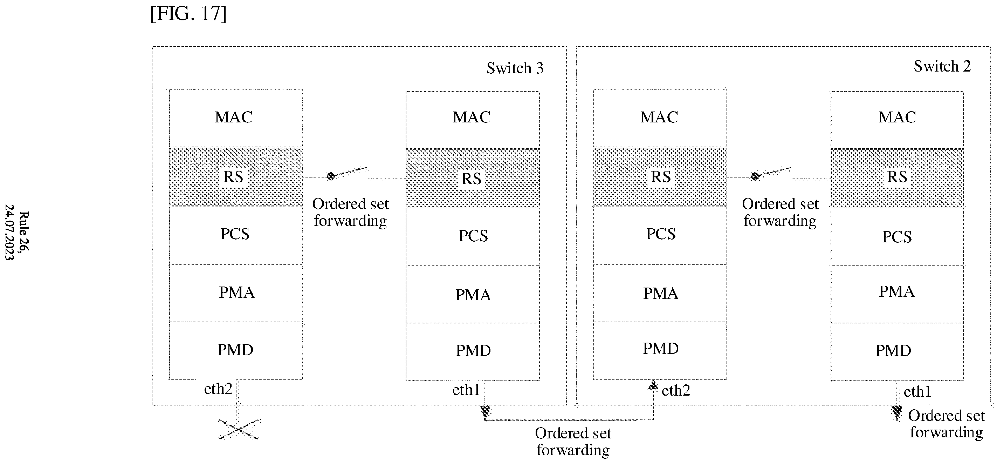

An ordered set is forwarded at a lower layer of a MAC layer. For example, for a forwarding process at an RS sublayer, refer to FIG. 17. Forwarding from a switch 3 to a switch 2 is used as an example. A reused ordered set in 64/66 encoding of a PCS layer may use an existing O code. For details, refer to a block format (block format) defined in the IEEE standard 802.3.

In this embodiment, the ring network formed by six 10 G switches is used as an example. In a scenario of 1500 bytes of background traffic, sending time of 1500-byte data is 1.2 $\mu$s, sending time of a 64/66 code block is 6.4 ns, and a propagation delay of a fault on an entire network is (1.2 $\mu$s + 0.0064 $\mu$s) * (6/2) = 3.6192 $\mu$s. In a vehicle-mounted or industrial field network, a line length is 0.5 km, a line transmission delay overhead is 0.25 $\mu$s (5 $\mu$s/km in the industry standard), and a total propagation delay is 3.6192 $\mu$s + 0.25 $\mu$s = 3.8692 $\mu$s.

Example 2: When a port of a switch on a ring network is 1 G, for a gigabit Ethernet (GE) interface, a reserved field of a K code may be reused. For details, refer to a valid special code group (valid special code group) defined in the IEEE standard 802.3. An ordered set continues to be reused, and a 1st field sequence of the ordered set uses K28.4.

For other fields after the ordered set, Lane 1, Lane 2, and Lane 3 may reuse a reserved part in a link status (Link Status) column of a defined ordered set and special code group (defined ordered set and special code group) in the IEEE standard 802.3 as required, and may be user-defined. Lane 1, Lane 2, and Lane 3 each correspond to one 8/10B encoded code block. A service process is the same as that in Example 1. Forwarding is performed at a lower layer of a MAC layer, such as an RS sublayer.

In this embodiment, the ring network formed by six 1 G switches is used as an example. In a scenario of 1500 bytes of background traffic, sending time of 1500-byte data is 12 $\mu$s, and one or more code blocks may be used to carry fault information for forwarding. Because code block forwarding is in nanoseconds, time may be ignored, and a propagation delay of a fault on an entire network is (12 $\mu$s) * (6/2) = 36 $\mu$s. In a vehicle-mounted or industrial field network, a line length is 0.5 km, a line transmission delay overhead is 0.25 $\mu$s (5 $\mu$s/km in the industry standard), and a total propagation delay is 3.6 $\mu$s + 0.25 $\mu$s = 36.25 $\mu$s.

Example 3: An O code may be further reused to carry and forward fault information. In Example 1, the ordered set is reused, and 0 is still coded by using the O code at the PCS layer. In Example 3, for details, refer to a block format defined in the IEEE standard 802.3. Other types of the O code may be defined or reused. For example, during 64/66B encoding, BlockType (D0) may be newly defined or existing 0x66, 0x55, 0x4b, and the like may be used. O0 may be defined as another value. The PCS layer, an upper layer of the PCS layer, and a lower layer of a MAC layer (for example, another module layer defined by an RS sublayer or the lower layer of the MAC layer) is adapted to a newly defined or reused O code, to implement O code forwarding. A service process is the same as that in Example 1. The O code is forwarded at the lower layer of the MAC layer.

According to the fault information notification method provided in this embodiment of this application, a problem that efficiency of forwarding conventional fault propagation by using a packet at an L2 link layer and a packet at an upper layer according to a protocol is low is resolved. The conventional fault propagation depends on data packet forwarding, and a link fault cannot be rapidly notified to another node on a network. Consequently, a long delay exists in sensing a fault by the another node, and link switching performance is affected.

In this solution, the ordered set is reused to implement ordered set forwarding at the lower layer of the MAC layer. In this way, a fault location is propagated to the entire network, greatly shortening a propagation delay. The benefits are as follows.

Notification delay: 64/66 encoding is used as an example. Sending time of a 64/66B notification code block is 6.4 ns, code block processing is forwarded between ports at the lower layer of the MAC layer (for example, forwarded at an RS sublayer), and processing time may be ignored. A 10 G interface is used as an example. In a scenario with N devices, a notification delay in an idle state is 6.4 * (N - 1) ns + a ring network line medium transmission delay (50 $\mu$s for 10 kilometers). In a non-idle state, in a scenario in which a data packet is in a worst case, a notification delay is a (1.2 + 0.0064) * (N - 1) $\mu$s + a ring network line medium transmission delay. In the worst case scenario, devices on the ring network send data. For example, a 1500-byte service data packet is used as an example. Sending time in a 10 G link is about 1.2 $\mu$s. A ring network formed by 100 switches and 100 kilometers is used as an example. A notification delay is 120 $\mu$s + 500 $\mu$s = 620 $\mu$s in the worst case.

Bandwidth overhead: Code block sending is triggered only after a fault is detected, and the bandwidth overhead is ignored.

In the foregoing embodiment, in a bit stream-based fault notification method, a CCM in CFM may be replaced to trigger coordination of a network switching protection protocol such as ERPS, and a fault notification in a form of a bit stream in this application is used to trigger the ERPS or another network switching protection protocol to perform path switching.

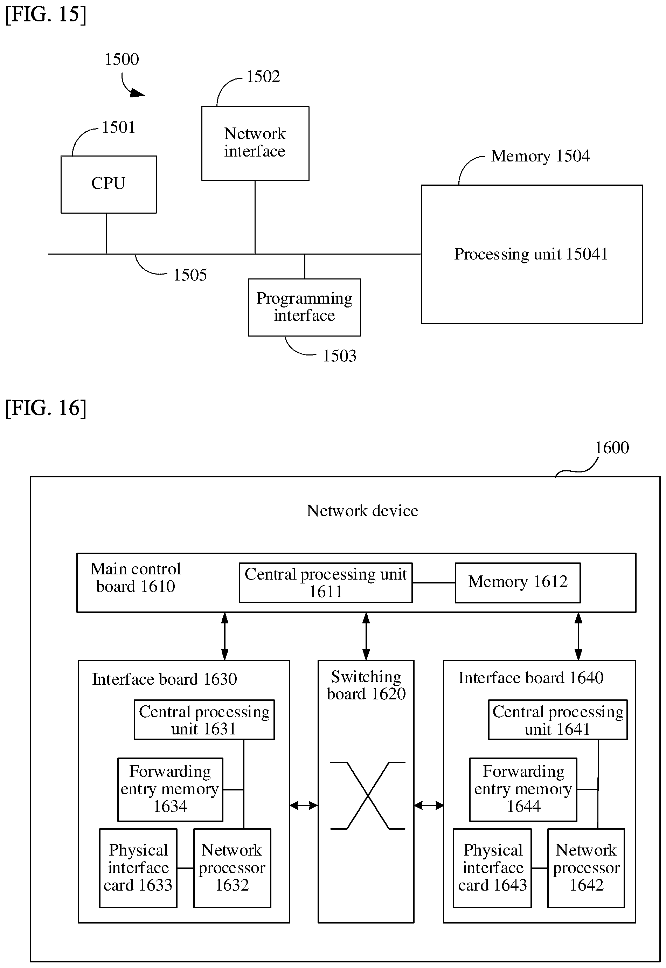

FIG. 15 is a diagram of a structure of a network device 1500 according to an embodiment of this application. Although the network device 1500 shown in FIG. 15 shows some specific features, a person skilled in the art may be aware from embodiments of this application that, for brevity, FIG. 15 does not show various other features, to avoid confusing more related aspects of the implementations disclosed in embodiments of this application. Therefore, for example, in some implementations, the network device 1500 includes one or more processing units (for example, CPUs) 1501, a network interface 1502, a programming interface 1503, a memory 1504, and one or more communication buses 1505 configured to interconnect various components. In some other implementations, some functional components or units may be omitted or added to the network device 1500 according to the foregoing example.

In some implementations, the network interface 1502 is configured to connect to one or more other network devices/servers in a network system. In some implementations, the communication bus 1505 includes a circuit that interconnects and controls communication between system components. The memory 1504 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 1504 may further include a volatile memory. The volatile memory may be a random access memory (random access memory, RAM), and is used as an external cache.

In some implementations, the memory 1504 or a non-transitory computer-readable storage medium of the memory 1504 stores the following programs, modules, and data structures, or a subset thereof, for example, includes an obtaining unit (not shown in the figure), a sending unit (not shown in the figure), and a processing unit 15041.

In a possible embodiment, the network device 1500 may have any function of the first network device in the foregoing method embodiment corresponding to FIG. 3 or FIG. 5.

It should be understood that the network device 1500 corresponds to the first network device in the foregoing method embodiment. Modules and the foregoing other operations and/or functions in the network device 1500 are separately configured to implement various steps and the method implemented by the first network device in the method embodiment. For specific details, refer to the method embodiment corresponding to FIG. 3 or FIG. 5. For brevity, details are not described herein again.

It should be understood that, in this application, the network interface 1502 on the network device 1500 may complete a data receiving and sending operation, or the processor may invoke program code in the memory, and implement a function of a transceiver unit in cooperation with the network interface 1502 when required.

In various implementations, the network device 1500 is configured to perform the packet transmission method provided in embodiments of this application, for example, perform the packet transmission method corresponding to the embodiment shown in FIG. 3 or FIG. 5.

A specific structure of the network device in FIG. 15 in this application may be shown in FIG. 16.

FIG. 16 is a diagram of a structure of a network device 1600 according to an embodiment of this application. The network device 1600 includes a main control board 1610 and an interface board 1630.

The main control board 1610 is also referred to as a main processing unit (main processing unit, MPU) or a route processor (route processor). The main control board 1610 is configured to control and manage each component in the network device 1600, including functions of route calculation, device management, device maintenance, and protocol processing. The main control board 1610 includes a central processing unit 1611 and a memory 1612.

The interface board 1630 is also referred to as a line processing unit (line processing unit, LPU), a line card (line card), or a service board. The interface board 1630 is configured to provide various service interfaces and forward a data packet. The service interface includes but is not limited to an Ethernet interface and a packet over SONET/SDH (POS) interface. The interface board 1630 includes a central processing unit 1631, a network processor 1632, a forwarding entry memory 1634, and a physical interface card (physical interface card, PIC) 1633.

The central processing unit 1631 on the interface board 1630 is configured to: control and manage the interface board 1630 and communicate with the central processing unit 1611 on the main control board 1610.

The network processor 1632 is configured to implement packet forwarding processing. A form of the network processor 1632 may be a forwarding chip.

The physical interface card 1633 is configured to implement an interconnection function at a physical layer. Original traffic enters the interface board 1630 from the physical interface card 1633, and a processed packet is sent from the physical interface card 1633. The physical interface card 1633 includes at least one physical interface. The physical interface is also referred to as a physical port, and the physical interface may be a flexible Ethernet (Flexible Ethernet, FlexE) physical interface. The physical interface card 1633, also referred to as a subcard, may be mounted on the interface board 1630, and is responsible for converting an optical/electrical signal into a packet, performing validity check on the packet, and forwarding the packet to the network processor 1632 for processing. In some embodiments, the central processing unit 1631 of the interface board 1630 may further perform a function of the network processor 1632, for example, implement software forwarding based on a general-purpose CPU, so that the interface board 1630 does not need the network processor 1632.

Optionally, the network device 1600 includes a plurality of interface boards. For example, the network device 1600 further includes an interface board 1640. The interface board 1640 includes a central processing unit 1641, a network processor 1642, a forwarding entry memory 1644, and a physical interface card 1643.

Optionally, the network device 1600 further includes a switching board 1620. The switching board 1620 may also be referred to as a switch fabric unit (switch fabric unit, SFU). When the network device has a plurality of interface boards 1630, the switching board 1620 is configured to perform data exchange between the interface boards. For example, the interface board 1630 and the interface board 1640 may communicate with each other through the switching board 1620.

The main control board 1610 is coupled to the interface board. For example, the main control board 1610, the interface board 1630, the interface board 1640, and the switching board 1620 are connected to each other through a system bus and/or a system backplane to implement interworking. In a possible implementation, an inter-process communication (inter-process communication, IPC) protocol channel is established between the main control board 1610 and the interface board 1630, and the main control board 1610 and the interface board 1630 communicate with each other through the IPC channel.

Logically, the network device 1600 includes a control plane and a forwarding plane. The control plane includes the main control board 1610 and the central processing unit 1631. The forwarding plane includes components for performing forwarding, such as the forwarding entry memory 1634, the physical interface card 1633, and the network processor 1632. The control plane performs functions such as route advertising, generating a forwarding table, processing signaling and protocol packets, and configuring and maintaining a status of a device. The control plane delivers the generated forwarding table to the forwarding plane. On the forwarding plane, the network processor 1632 looks up the table and forwards a packet received by the physical interface card 1633 based on the forwarding table delivered by the control plane. The forwarding table delivered by the control plane may be stored in the forwarding entry memory 1634. In some embodiments, the control plane and the forwarding plane may be completely separated, and are not on a same device.

It should be understood that the first port 1001 (or the first port 1101) and the second port 1002 (or the second port 1102) in the network device 1000 (or the network device 1100) may be equivalent to the physical interface card 1633 or the physical interface card 1643 in the network device 1600; and the processing module 1003 (or the processing module 1103) in the network device 1000 (or the network device 1100) may be equivalent to the central processing unit 1611 or the central processing unit 1631 in the network device 1600, or may be equivalent to program code or an instruction stored in the memory 1612.

It should be understood that, in this embodiment of this application, operations on the interface board 1640 are the same as operations on the interface board 1630. For brevity, details are not described again. It should be understood that the network device 1600 in this embodiment may correspond to the first network device in the foregoing method embodiments. The main control board 1610, and the interface board 1630 and/or the interface board 1640 in the network device 1600 may implement functions and/or various steps implemented by the first network device in the foregoing method embodiments. For brevity, details are not described herein again.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board is responsible for processing service data of an entire system. In a distributed forwarding architecture, the network device may have at least one switching board, and data exchange between the plurality of interface boards is implemented by using the switching board, to provide a large-capacity data exchange and processing capability. Optionally, the form of the network device may also be that there is only one card. In other words, there is no switching board, and functions of the interface board and the main control board are integrated on the one card. In this case, a central processing unit on the interface board and a central processing unit on the main control board may be combined into one central processing unit on the one card, to perform a function obtained after the two are superimposed. Which architecture is specifically used depends on a specific networking deployment scenario. This is not uniquely limited herein.

In some possible embodiments, the network device may be implemented as a virtualized device. The virtualization device may be a virtual machine (virtual machine, VM), a virtual router, or a virtual switch that runs a program for sending a packet. The virtualization device is deployed on a hardware device (for example, a physical server). For example, the network device may be implemented based on a general-purpose physical server in combination with a network function virtualization (network function virtualization, NFV) technology.

It should be understood that the network devices in the foregoing product forms separately have any function of the network device in the foregoing method embodiments. Details are not described herein.

Further, an embodiment of this application further provides a computer program product. When the computer program product runs on a network device, the network device is enabled to perform the method performed by the first network device in the method embodiment corresponding to FIG. 3 or FIG. 5.

An embodiment of this application further provides a chip system. The chip system includes a processor and an interface circuit. The interface circuit is configured to receive instructions and transmit the instructions to the processor. The processor is configured to support a network device in implementing functions in the foregoing aspects, for example, generating or processing data and/or information in the foregoing method.

Optionally, the chip system further includes a memory. The memory is configured to store program instructions and data that are necessary for the network device, to implement functions in any one of the foregoing aspects. The chip system may include a chip, or may include a chip and another discrete component.

There may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

Optionally, when the chip system runs on the network device side, the network device may be supported to perform the method provided in FIG. 3 or FIG. 5.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a terminal. Certainly, the processor and the storage medium may alternatively exist in a first communication apparatus as discrete components.

It may be clearly understood by a person skilled in the art that for convenience and conciseness of description, for specific working processes of the foregoing systems, apparatus, and units, refer to the corresponding processes in the foregoing method embodiments, and details are not described herein again.

In the several embodiments provided in this application, the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A fault information notification method, performed by a first network device, wherein the first network device comprises a first port and a second port, and the method comprises:

   after the first port detects a first fault, generating a first fault notification through the first port; and
   sending, through the second port, a first bit stream generated by the first port, wherein the first bit stream carries the first fault notification written according to a preset definition.

2. The method according to claim 1, wherein after the first port detects the first fault, the method further comprises: stopping sending service data sent from the first port.

3. The method according to claim 1 or 2, further comprising:

   after the first port detects that the first fault is recovered, generating a first fault recovery notification through the first port; and
   sending, through the second port, a second bit stream generated by the first port, wherein the second bit stream carries the first fault recovery notification written according to the preset definition.

4. The method according to any one of claims 1 to 3, wherein the first fault notification is generated in a reconciliation layer apparatus or a physical coding sublayer PCS apparatus.

5. The method according to any one of claims 1 to 4, wherein the first fault notification is specifically a first ordered set.

6. The method according to claim 5, wherein the preset definition comprises:
   reusing a reserved field of an ordered set, and representing a fault notification by using a value of a lane, wherein the fault notification comprises one or more of fault information, fault recovery information, a fault distance, device information, and port information.

7. A fault information notification method, performed by a second network device, wherein the second network device comprises a first port and a second port, and the method comprises:

   receiving a first bit stream from the first port, wherein the first bit stream carries a first fault notification written according to a preset definition, the first bit stream is generated by a port of a first network device, the first fault notification is generated based on a first fault, and the first network device is a device that detects the first fault; and
   sending the first bit stream through the second port.

8. The method according to claim 7, wherein the first fault notification comprises a first fault distance of the first fault; and the sending the first bit stream through the second port specifically comprises:

   modifying the first bit stream through the second port according to the preset definition, to increase the first fault distance in the first bit stream by one unit; and
   sending a modified first bit stream from the second port.

9. The method according to claim 8, wherein after the receiving a first bit stream from the first port, the method further comprises:

   extracting the first fault distance from the first fault notification; and
   stopping sending service data that is sent from the first port and whose transmission distance is not less than the first fault distance.

10. The method according to any one of claims 7 to 9, further comprising:

    receiving a second bit stream from the first port, wherein the second bit stream carries a first fault recovery notification written according to the preset definition, the second bit stream is generated by the port of the first network device, and the first fault recovery notification is generated after the first network device detects that the first fault is recovered;
    modifying the second bit stream through the second port according to the preset definition, to increase the first fault distance in the second bit stream by one unit; and
    sending a modified second bit stream from the second port.

11. The method according to any one of claims 7 to 10, wherein if the second port is connected to a loop-breaking link, after the receiving a first bit stream from the first port, the method further comprises:
    unblocking the loop-breaking link.

12. The method according to claim 11, further comprising:
blocking the loop-breaking link after receiving the second bit stream carrying the first fault recovery notification from the first port.

13. A network device, comprising a first port and a second port, wherein

the first port is configured to generate a first fault notification after detecting a first fault;
the first port is further configured to generate a first bit stream, wherein the first bit stream carries the first fault notification written according to a preset definition; the first port is further configured to send the first bit stream to the second port; and the second port is configured to forward the first bit stream.

14. The network device according to claim 13, further comprising a processing module, wherein
the processing module is configured to stop sending service data sent from the first port.

15. The network device according to claim 13 or 14, wherein

the first port is further configured to generate a first fault recovery notification after detecting that the first fault is recovered;
the first port is further configured to generate a second bit stream, wherein the second bit stream carries the first fault recovery notification written according to the preset definition;
the first port is further configured to send the second bit stream to the second port; and
the second port is further configured to forward the second bit stream.

16. A network device, comprising a first port and a second port, wherein

the first port is configured to receive a first bit stream, wherein the first bit stream carries a first fault notification written according to a preset definition, the first bit stream is generated by a port of a faulty link device, the first fault notification is generated based on a first fault, and the faulty link device is a node device that detects the first fault;
the first port is further configured to forward the first bit stream to the second port; and
the second port is configured to send the first bit stream.

17. The network device according to claim 16, wherein the first fault notification comprises a first fault distance of the first fault;

the second port is further configured to modify the first bit stream according to the preset definition, to increase the first fault distance in the first bit stream by one unit; and
the second port is specifically configured to send a modified first bit stream.

18. The network device according to claim 17, further comprising a processing module, wherein

the processing module is configured to extract the first fault distance from the first fault notification; and
the processing module is further configured to stop sending service data that is sent from the first port and whose transmission distance is not less than the first fault distance.

19. The network device according to any one of claims 16 to 18, wherein if the second port is connected to a loop-breaking link,
the processing module is further configured to unblock the loop-breaking link after the first bit stream is received from the first port.

20. The network device according to claim 19, wherein
the processing module is further configured to block the loop-breaking link after a second bit stream carrying a first fault recovery notification is received from the first port.

21. An information transmission architecture, comprising a first network device and a second network device, wherein

the first network device is configured to generate a first bit stream after detecting a first fault, wherein the first bit stream carries a first fault notification that is written according to a preset definition and that corresponds to the first fault; and

the first network device is further configured to send the first bit stream to the second network device.

22. The architecture according to claim 21, wherein

the second network device is configured to receive the first bit stream; and
the second network device is further configured to forward the first bit stream.

23. The architecture according to claim 22, wherein the first fault notification comprises a first fault distance of the first fault; and
the second network device is specifically configured to: modify the first bit stream according to the preset definition, to increase the first fault distance in the first bit stream by one unit; and forward a modified first bit stream.

24. The architecture according to any one of claims 21 to 23, wherein if the second network device is connected to a loop-breaking link,
the second network device is further configured to unblock the loop-breaking link after receiving the first bit stream.

25. The architecture according to any one of claims 21 to 24, wherein the first fault notification is generated in a reconciliation layer apparatus or a physical coding sublayer PCS apparatus.

26. The architecture according to any one of claims 21 to 25, wherein the first fault notification is specifically a first ordered set.

27. The architecture according to claim 26, wherein the preset definition comprises:
reusing a reserved field of an ordered set, and representing a fault notification by using a value of a lane, wherein the fault notification comprises one or more of fault information, fault recovery information, a fault distance, device information, and port information.

28. A computer-readable storage medium, wherein the computer-readable storage medium stores a computer program, and when the computer program is executed by a communication apparatus, the communication apparatus is enabled to perform the method according to any one of claims 1 to 6 or 7 to 12.

29. A computer program product, comprising a program, wherein when the program is executed by a processor, the method according to any one of claims 1 to 6 or 7 to 12 is implemented.

EP 4 604 476 A1

[FIG. 1]

[FIG. 2]

22

## [FIG. 3]

| After a first port detects a first fault, generate a first fault notification through the first port |
|---|
— 301

↓

| Send, through a second port, a first bit stream generated by the first port, where the first bit stream carries the first fault notification written according to a preset definition |
|---|
— 302

↓

| Stop sending service data sent from the first port |
|---|
— 303

↓

| After the first port detects that the first fault is recovered, generate a first fault recovery notification through the first port |
|---|
— 304

↓

| Send, through the second port, a second bit stream generated by the first port, where the second bit stream carries the first fault recovery notification written according to the preset definition |
|---|
— 305

## [FIG. 4]

**Table 46-5-Sequence ordered sets**

| Lane 0 | Lane 1 | Lane 2 | Lane 3 | Description |
|---|---|---|---|---|
| Sequence | 0x00 | 0x00 | 0x00 | Reserved |
| Sequence | 0x00 | 0x00 | 0x01 | Local fault |
| Sequence | 0x00 | 0x00 | 0x02 | Remote fault |
| Sequence | 0x00 | 0x00 | 0x03 | Link interruption |
| Sequence | ≥ 0x00 | ≥ 0x00 | ≥ 0x04 | Reserved |
| NOTE---Values in Lane 1, Lane 2, and Lane 3 columns are in hexadecimal, most significant bit to least significant bit (i.e., <7:0>). The link fault signaling state diagram allows future standardization of reserved Sequence ordered sets for functions other than link fault indications | | | | |

[FIG. 5]

```
┌─────────────────────────────────────────────────┐
│ Receive a first bit stream from a first port,     │──── 501
│ where the first bit stream carries a first fault  │
│ notification written according to a preset        │
│ definition                                         │
└─────────────────────────────────────────────────┘
                         │
                         ▼
┌─────────────────────────────────────────────────┐
│ Modify the first bit stream through a second port │──── 502
│ according to the preset definition, to increase a │
│ first fault distance in the first bit stream by    │
│ one unit                                           │
└─────────────────────────────────────────────────┘
                         │
                         ▼
┌─────────────────────────────────────────────────┐
│ Send a modified first bit stream from the second  │──── 503
│ port                                               │
└─────────────────────────────────────────────────┘
                         │
                         ▼
┌─────────────────────────────────────────────────┐
│ Extract the first fault distance from the first   │──── 504
│ fault notification                                 │
└─────────────────────────────────────────────────┘
                         │
                         ▼
┌─────────────────────────────────────────────────┐
│ Stop sending service data that is sent from the   │──── 505
│ first port and whose transmission distance is not  │
│ less than the first fault distance                 │
└─────────────────────────────────────────────────┘
                         │
                         ▼
┌─────────────────────────────────────────────────┐
│ Receive a second bit stream from the first port,  │──── 506
│ where the second bit stream carries a first fault │
│ recovery notification written according to the    │
│ preset definition                                  │
└─────────────────────────────────────────────────┘
                         │
                         ▼
┌─────────────────────────────────────────────────┐
│ Modify the second bit stream through the second   │──── 507
│ port according to the preset definition, to        │
│ increase the first fault distance in the second    │
│ bit stream by one unit                             │
└─────────────────────────────────────────────────┘
                         │
                         ▼
┌─────────────────────────────────────────────────┐
│ Send a modified second bit stream from the second │──── 508
│ port                                               │
└─────────────────────────────────────────────────┘
```

[FIG. 6]

Ordered set fault information

Ordered set fault information

1   eth2 ──✕── eth1   2   eth2 ─────→ eth1   3   eth2 ─────→ eth1   4

Link down

[FIG. 7]

Ordered set fault
distance: Two hops

Ordered set fault
distance: Three hops

(1) eth2 ──╳── eth1 (2) eth2 ──── eth1 (3) eth2 ──── eth1 (4)

Link down

[FIG. 8]

Ordered set fault
recovery

Ordered set fault
recovery

(1) eth2 ──── eth1 (2) eth2 ──── eth1 (3) eth2 ──── eth1 (4)

Link recovery

[FIG. 9]

Ordered set fault recovery
distance: Two hops

Ordered set fault recovery
distance: Three hops

(1) eth2 ──── eth1 (2) eth2 ──── eth1 (3) eth2 ──── eth1 (4)

Link recovery

[FIG. 10]

Network device 1000

1001          1003          1002

| First port | Processing module | Second port |

[FIG. 11]

Network device 1100

1101          1103          1102

| First port | Processing module | Second port |

[FIG. 12]

B 3 eth2 active
B −1 eth1 slave
C 2 eth2 active
C −1 eth1 slave

B 2 eth2 active
B −1 eth1 slave
C 1 eth2 active
C −1 eth1 slave

Loop-breaking block before
a fault

B 2 eth1 active
B −1 eth2 slave
C 3 eth1 active
C −1 eth2 slave

B 1 eth1 active
B −1 eth2 slave
C 2 eth1 active
C −1 eth2 slave

C 0 eth3 active
B 1 eth2 active
B −1 eth1 slave

B 0 eth3 active
C 1 eth1 active
C −1 eth2 slave

Data flow direction from
A to B

Data flow direction from
A to C

[FIG. 13]

B 2 eth2 down
B −1 eth1 active
C 1 eth2 active
C −1 eth1 slave

B 3 eth2 down
B −1 eth1 active
C 2 eth2 active
C −1 eth1 slave

eth3   eth1   eth2   eth1   1   eth1

A   2   Fault distance 3   eth2

B 2 eth1 active
B −1 eth2 slave
C 3 eth1 down
C −1 eth2 active

6

eth2

eth1

Fault distance 2   Fault distance 3

eth1   eth2

eth3   C   3   eth2   Fault distance 2   eth1   5

B 1 eth1 active
B −1 eth2 slave
C 2 eth1 down
C −1 eth2 active

C 0 eth3 active
B 1 eth2 down
B −1 eth1 active

eth1   eth2

4

eth3

B

B 0 eth3 active
C 1 eth1 down
C −1 eth2 active

- - - - - ▶ Data flow direction from A to B

- - - - - ▶ Data flow direction from A to C

EP 4 604 476 A1

[FIG. 14]

B 3 eth2 active
B −1 eth1 slave
C 2 eth2 active
C −1 eth1 slave

B 2 eth2 active
B −1 eth1 slave
C 1 eth2 active
C −1 eth1 slave

ACK acknowledgment
distance 2

Block a port again after a fault is
recovered

Recovery notification
distance 3

B 2 eth1 active
B −1 eth2 slave
C 3 eth1 active
C −1 eth2 slave

ACK acknowledgment
distance 1

Recovery notification
distance 2

Recovery notification
distance 3

ACK acknowledgment
distance 2

B 1 eth1 active
B −1 eth2 slave
C 2 eth1 active
C −1 eth2 slave

Recovery notification
distance 2

ACK acknowledgment
distance 1

C 0 eth3 active
B 1 eth2 active
B −1 eth1 slave

B 0 eth3 active
C 1 eth1 active
C −1 eth2 slave

Data flow direction from
A to B

Data flow direction
from A to C

EP 4 604 476 A1

[FIG. 15]

1500

1502

Network
interface

1501

CPU

Memory 1504

Processing unit 15041

1505

Programming
interface

1503

[FIG. 16]

1600

Network device

Main control
board 1610

Central processing unit
1611

Memory 1612

Interface board 1630

Central processing
unit 1631

Forwarding
entry memory
1634

Physical
interface
card 1633

Network
processor
1632

Switching
board 1620

Interface board 1640

Central processing
unit 1641

Forwarding
entry memory
1644

Physical
interface
card 1643

Network
processor
1642

[FIG. 17]

Rule 26,
24.07.2023

## INTERNATIONAL SEARCH REPORT

| International application No. |
| --- |
| **PCT/CN2023/101540** |

| A. | CLASSIFICATION OF SUBJECT MATTER |
| --- | --- |

H04L41/0631(2022.01)i

According to International Patent Classification (IPC) or to both national classification and IPC

| B. | FIELDS SEARCHED |
| --- | --- |

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT; ENTXT; DWPI; CNKI; VEN: 故障, 自动保护倒换, 路径, 切换, 故障信息通知, 第一端口, 第二端口, 故障恢复, 时间, 比特流, 故障距离, fault, automatic protection system, APS, path?, switch+, fault information notification, the first port, the second port, failure recovery, tim+, bit stream+, fault distance

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111865637 A (FIBERHOME TELECOMMUNICATION TECHNOLOGIES CO., LTD.) 30 October 2020 (2020-10-30) entire document | 1-29 |
| A | CN 102104520 A (ZTE CORP.) 22 June 2011 (2011-06-22) entire document | 1-29 |
| A | CN 103825754 A (STATE GRID CORPORATION OF CHINA et al.) 28 May 2014 (2014-05-28) entire document | 1-29 |
| A | WO 2021057350 A1 (ZTE CORP.) 01 April 2021 (2021-04-01) entire document | 1-29 |
| A | US 2010080120 A1 (BEJERANO, Y.; KOPPOL PRAMOD V. N.) 01 April 2010 (2010-04-01) entire document | 1-29 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 September 2023** | **28 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101540**

| Patent document cited in search report | | | Publication date (day/month/year) | Patent family member(s) | | | Publication date (day/month/year) |
|---|---|---|---|---|---|---|---|
| CN | 111865637 | A | 30 October 2020 | None | | | |
| CN | 102104520 | A | 22 June 2011 | None | | | |
| CN | 103825754 | A | 28 May 2014 | None | | | |
| WO | 2021057350 | A1 | 01 April 2021 | None | | | |
| US | 2010080120 | A1 | 01 April 2010 | US | 7859995 | B2 | 28 December 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211299195